# EUROPÄISCHE PATENTSCHRIFT

(11) **EP 3 405 699 B1**
(45) Veröffentlichungstag und Bekanntmachung des Hinweises auf die Patenterteilung: **12.10.2022**
(21) Anmeldenummer: 17701117.8
(22) Anmeldetag: 20.01.2017
(51) Int. Cl.: F16G 13/20, E05F 15/00

(54) **AKTUATOR MIT EINER RÜCKENSTEIFEN KETTE**
ACTUATOR WITH A RIGID-SPINED CHAIN
ACTIONNEUR COMPORTANT UNE CHAÎNE SEMI-RIGIDE

(30) Priorität: 20.01.2016 DE 102016000568
(43) Veröffentlichungstag der Anmeldung: 28.11.2018
(73) Patentinhaber: IWIS Antriebssysteme GmbH & Co. KG, 81369 München (DE)
(72) Erfinder: TCHATCHOUA, Joel Tchaweu, 81278 Puchheim (DE); SAHIN, Orhan, 81377 München (DE); WOLF, Thomas, 81249 München (DE); RASCH, Frank, 57234 Wilnsdorf (DE); POTDAR, Abhijit, 81243 München (DE); TEUBER, Toralf, 85375 Neufahrn (DE); HARTINGER, Gerhard, 82538 Geretsried (DE)
(74) Vertreter: Dantz, Dirk
(86) Internationale Anmeldenummer: PCT/EP2017/051198
(87) Internationale Veröffentlichungsnummer: WO 2017/125555

(56) Entgegenhaltungen:
- EP-A1- 2 386 781
- EP-A2- 1 859 977
- WO-A1-03/014507
- WO-A1-2014/097211
- GB-A- 2 059 499
- JP-A- 2011 137 514
- JP-A- 2011 144 874

## Beschreibung

Die vorliegende Erfindung betrifft einen Aktuator mit einer rückensteifen Kette, einem Antriebsmotor- und einer vom Antriebsmotor antreibbaren Schnecke mit Wendelnut, wobei die rückensteife Kette Eingriffsmittel aufweist und an der Schnecke entlanggeführt ist und mit dieser zum Antreiben der rückensteifen Kette mittels der Eingriffsmittel und der Wendelnut im Eingriff steht. Aus der DE 20221581 U1 ist ein Aktuator bekannt, der mittels einer, von einem Motor angetriebenen Spindel eine rückensteife Kette bewegt. Der Aktuator wird zum Beispiel verwendet, um einen Fensterflügel zu öffnen und zu schließen. Der Elektromotor ist mit einem Getriebe versehen und treibt die Spindel im Wesentlichen in Verlängerung des Motors an. Auch die Unterbringung der Kette erfolgt hauptsächlich in Verlängerung des Elektromotors entlang der Spindel, mit der die Kette in Eingriff steht. Die Hubbewegung dieses Aktuators erfolgt im Wesentlichen senkrecht zur Spindelachse. Hierzu wird die rückensteife Kette vor dem Elektromotor umgelenkt und nach außen geführt, wo sie dann mit dem zu betätigenden Element, z. B. einem Fensterflügel, verbunden ist. Dies führt zu einer sehr schlanken Ausgestaltung des Aktuators, die jedoch eine beträchtliche Länge einnimmt.

Eine handbetriebene Version eines Aktuators mit einer rückensteifen Kette ist aus der DE714768 bekannt. Auch hier erfolgt eine Umlenkung der Kette in der Art, dass eine ungünstige Unterbringung der Kette erfolgt. JP2011137514A und EP1859977A2 offenbaren auch Beispiele bekannter Aktuatoren.

Bei den bekannten Aktuatoren mit einer rückensteifen Kette führt die Unterbringung der Kette zu einer platzeinnehmenden Bauweise und je nach Schubkraftrichtung zu einem nicht ganz unerheblichen Verschleiß.

Es ist daher die Aufgabe der vorliegenden Erfindung einen Aktuator der eingangs genannten Art bereitzustellen, der erweiterte Möglichkeiten der Kettenunterbringung bietet und wenig Verschleiß aufweist.

Bei einem gattungsgemäßen Aktuator ist deshalb vorgesehen, dass der Kerndurchmesser der Schnecke größer ist als der doppelte Abstand der Motorachse zur Motoraußenseite, an der die rückensteife Kette entlanggeführt ist und die rückensteife Kette mit den Eingriffsmitteln zumindest teilweise seitlich am Antriebsmotor entlanggeführt ist. Das bedeutet, dass auch der von dem Antriebsmotor eingenommene Bereich des Aktuators zumindest teilweise gleichzeitig von der Kettenlänge nutzbar gemacht wird, wodurch der Aktuator bezogen auf eine bestimmte Kettenlänge auch mit einer geringeren Gesamtlänge auskommt. Durch diesen Bauraumgewinn ist es für einige Anwendungen auch überflüssig, die Kette nunmehr senkrecht zur Schneckenachse wegzuführen und die Betätigung vorzunehmen. Vielmehr kann die Betätigung auch entlang der Schnecke erfolgen, bevorzugt parallel zur Schneckenachse. Aufgrund der Tatsache, dass die Kette bei einer solchen Ausgestaltung nicht in einem die Schubkraft übertragenden Bereich umgelenkt werden muss, kann auch der Verschleiß gering gehalten werden. Bei entsprechender Ausgestaltung der rückensteifen Kette bietet eine solche Anordnung auch die Möglichkeit die Kraft entweder vom Antriebsmotor weg oder entlang des Antriebsmotors zu übertragen. Bei Ausgestaltungen, bei denen überhaupt keine Umlenkung der rückensteifen Kette erfolgen muss, können auch Schubkräfte in beide Richtungen übertragen werden. Generell ergibt sich durch die Erfindung eine Ausgestaltungsmöglichkeit die auf elektrischem Wege einen Hydraulik- oder Pneumatikzylinder ersetzen kann, wobei die Betätigungsrichtung im Wesentlichen mit der von Hydraulik- und Pneumatikzylinder übereinstimmt. Aus Vereinfachungsgründen können bevorzugt die Motorachse und die Schneckenachse koaxial zueinander angeordnet sein. Die Schnecke weißt dann einen großen Durchmesser auf, der ein entsprechendes teilweise Entlangführen der rückensteifen Kette an den funktionswichtigsten Bauteilen des Antriebsmotors zulässt. Sofern handelsübliche Antriebsmotoren verwendet werden, wird die Kette in aller Regel seitlich am Antriebsmotor (einschließlich Gehäuse) vorbeigeführt. Sonderkonstruktionen lassen sicherlich auch das integrierte Entlang- bzw. Hindurchführen der rückensteifen Kette am und im Antriebsmotor zu. Unabhängig davon wird der Durchmesser der Schnecke bei einer koaxialen Ausgestaltung immer größer sein als der Durchmesser des Motorrotors und entsprechend größer sein als die zugehörige Abmessung des Stators (ohne Motorgehäuse). Eventuell überstehende Teile der rückensteifen Kette werden an der Motoraußenseite entlanggeführt. Unter Kerndurchmesser der Schnecke versteht man in diesem Zusammenhang z. B. den Grunddurchmesser oder Fußdurchmesser der eingebrachten Wendelnut. Es gibt verschiedene Möglichkeiten, wie die rückensteife Kette mit der Schnecke in Eingriff kommen kann. Die Gelenkachsen der rückensteifen Kette können dabei genau senkrecht zur Schneckenachse ausgerichtet sein oder im Abstand zu dieser quer verlaufen.

Bei einer besonders bevorzugten Ausgestaltung wird die rückensteife Kette in einer Ebene am Antriebsmotor entlanggeführt, die parallel zur geometrischen Motorachse angeordnet ist. Aufgrund der Tatsache, dass die rückensteife Kette in diesem Bereich nicht mehr aus der Ebene heraus umgelenkt wird, besteht auch die Möglichkeit, entlang dieser Ebene eine Schubkraft aufzubringen. Aber unabhängig davon, ob eine Schubkraft entlang des Antriebsmotors aufgebracht werden soll, eignet sich die Führung in einer Ebene auch zur Erzielung einer kompakten Bauweise, da sich die rückensteife Kette sehr nah entlang des Antriebsmotors bewegen kann.

Um insgesamt eine beträchtliche Längenreduktion eines solchen Aktuators mit einer rückensteifen Kette hinzubekommen, ist gemäß einer weiteren Variante vorgesehen, dass die rückensteife Kette über eine Länge am Antriebsmotor vorbeiführbar ist, die mindestens 50% der Länge, bevorzugt mindestens 80% der Länge des Antriebsmotors entspricht. Zu einer Längenreduktion kommt es insbesondere dann, wenn die Druckkraft vom Antriebsmotor weg aufgebracht werden soll, weil dann die nicht druckbeaufschlagte bzw. nicht kraftbeaufschlagte Länge der Antriebskette sich entlang des Antriebsmotors erstreckt und nicht zu einer Gesamtverlängerung des Aktuators führt. Deshalb bietet sich auch bei einer weiteren Ausgestaltung an, dass seitlich entlang des Antriebsmotors ein Kettendepot mit mindestens zwei nebeneinanderliegenden, bevorzugt parallelen Abschnitten der rückensteifen Kette ausgebildet sein kann. Das Depot kann entweder das Gesamtdepot für die rückensteife Kette oder ein Zwischendepot sein. Bevorzugt ist jedoch das betätigungsferne Ende der rückensteifen Kette im Bereich des Depots befestigt. Je nach Größe des Antriebsmotors ergeben sich beträchtliche Kettenlängenspeicherkapazitäten. Im Vergleich zu bekannten Aktuatoren dieser Art baut diese Variante zwar etwas breiter (im ungünstigsten Fall etwas mehr als eine Kettenbreite); jedoch verkürzt sich die Gesamtlänge des Aktuators im eingefahrenen Zustand der rückensteifen Kette beträchtlich.

Deshalb kann auch günstigerweise in dem Kettendepot ein Abschnitt der Antriebskette unterbringbar sein, dessen Länge mindestens der 1,5-fachen Länge des Antriebsmotors entspricht. Die Kette wird demnach im Depot hin- und hergeführt, was auch mehrfach erfolgen kann.

Damit möglichst keine Sonderbauformen eingesetzt werden müssen und auf herkömmliche Antriebsmotoren zurückgegriffen werden kann, ist gemäß einer weiteren Ausgestaltung vorgesehen, dass die Schneckenachse und die Motorachse koaxial angeordnet sind, wobei die Schnecke einen Außendurchmesser aufweist, der größer ist als der doppelte Abstand der Motorachse zur Motoraußenseite, an der die rückensteife Kette entlanggeführt ist.

Viele handelsübliche Antriebsmotoren haben eine zu hohe Drehzahl und ein zu kleines Drehmoment. Deshalb ist es von Vorteil, wenn der Antriebsmotor ein Getriebe aufweist, das mit der Schnecke gekoppelt ist. Bevorzugt führt das Getriebe zu einer Untersetzung und einer Erhöhung des Drehmoments. Gängige Übersetzungen sind hier z. B. 4:1 oder 6:1.

Die Schnecke überträgt die Kraft auf die rückensteife Kette. Damit die rückensteife Kette möglichst geringem Verschleiß ausgesetzt ist, kann durch eine geeignete Materialwahl der Schnecke ein entsprechender Vorteil erzielt werden. Günstigerweise kann daher die Schnecke einen hülsenförmigen Schneckenkörper und eine drehfest mit diesem verbundene Antriebswelle aufweisen. Der Schneckenkörper ist dann aus einem schneller verschleißenden Material, z. B. einem Kunststoff, ausgestaltet. Auch können die Reibeigenschaften des Schneckenkörpers eine wichtige Rolle spielen. Der Schneckenkörper lässt sich dann auch sehr einfach gegen einen nicht verschlissenen Schneckenkörper austauschen, der dann mit der Antriebswelle drehfest verbunden wird.

Damit gängige rückensteife Ketten zum Einsatz kommen können ist vorteilhafterweise vorgesehen, dass die rückensteife Kette zumindest in vorbestimmten Abständen und zumindest einseitig seitlich überstehende Kettenbolzen derart aufweist, dass ein überstehender Teil der Kettenbolzen mit der Schnecke im Eingriff steht bzw. bringbar ist. Es kann demnach auf eine rückensteife Kette bekannter Bauart zurückgegriffen werden, bei der lediglich zumindest einige der Kettenbolzen verlängert ausgeführt sind. Alle anderen Bauelemente der rückensteifen Kette können in gleichartiger Weise erhalten bleiben und bedürfen keiner Überarbeitung.

Darüber hinaus kann vorgesehen werden, dass die Eingriffsmittel Elemente zur Reibungsminderung in der Form von mindestens einer drehbaren Rolle oder eines Gleitschuhs aufweisen, die in die Wendelnut der Schnecke eingreifen. Gleitschuhe können z.B. die Form einer Passfeder oder die Querschnittsform einer Ellipse aufweisen. Auch eine in der Höhe ballige Passfederform oder Ellipsenform kann verwendet werden. Dabei können sämtliche Seitenflächen ballig ausgeführt werden. Die Rollen können kugelgelagert oder selbst Kugellager sein. Auch die Verwendung von Sinterrollen, die gegebenenfalls schmiermittelgetränkt sind, ist möglich.

Bei einer weiteren Ausgestaltung ist vorgesehen, dass die Eingriffsmittel Elemente zum Schlupfausgleich in der Form von mehreren nebenaneinander an einem überstehenden Kettenbolzen angeordneter drehbarer Rollen und/oder einer konisch ausgebildeten Rolle und einer daran angepassten Wendelnut aufweisen. Aufgrund von Geschwindigkeitsunterschieden über den Schneckenradius entsteht ein Schlupf an den Kontaktstellen zwischen Rolle und Schnecke. Werden mehrere kürzere Rollen an einem verlängerten Bolzen angebracht, so wird jede Rolle eine andere Geschwindigkeit haben. Der Schlupf wird deutlich reduziert. Mit Zuhilfenahme der Konizität an den Rollen sowie an der Schnecke, werden Geschwindigkeitsunterschiede kompensiert.

Bei einer weiteren Ausführungsform ist vorgesehen, dass die rückensteife Kette im Bereich der Schnecke und des Antriebsmotors mittels einer Führungsschiene geführt ist, die eine der Eingriffseite abgewandte Seite und die jeweils nach außen weisenden Seiten der rückensteifen Kette abstützt. Für die Schiene können hinsichtlich ihrer Reibeigenschaften vorteilhafte Materialien eingesetzt werden. Auch kann die Führungsschiene austauschbar ausgestaltet werden. Die Führungsschiene bietet auch die Möglichkeit, für eine gezielte Führung der rückensteifen Kette, z. B. in einem Kettendepot zu sorgen. Die Führungsschiene kann auch Rollen oder Räder zur Reibungsminderung aufweisen oder durch Rollen oder Räder ersetzt werden.

Wenn der Aktuator als selbstständige Einheit für viele Anwendungsfälle und als Austauschmittel für z. B. einen Hydraulik- oder Pneumatikzylinder eingesetzt werden soll, ist es von weiterem Vorteil, wenn er eine kompakte Einheit darstellt und als selbsttragende Konstruktion ausgestaltet ist, die unabhängig von den entsprechenden Einsatzgegebenheiten als Modulbaustein verwendet werden kann. Hierzu ist gemäß einer Variante vorgesehen, dass eine Tragkonstruktion eine Grundplatte und eine die rückensteife Kette überbrückende, an der Grundplatte angeordnete Lagerplatte aufweist, wobei die Führung an der Grundplatte angeordnet ist und an der einen Seite der Lagerplatte die Schnecke gelagert ist. Die Grundplatte kann dann zur Anbringung des Aktuators in den verschiedenen Anbausituationen dienen.

Des Weiteren kann die Tragkonstruktion eine die rückensteife Kette überbrückende Frontplatte am vorderen Ende der Grundplatte und eine Endplatte am hinteren Ende der Grundplatte im Wesentlichen parallel zur Lagerplatte sowie Abstandshalter aufweisen, wobei die Frontplatte, die Lagerplatte und die Endplatte zusätzlich zur Grundplatte mittels der an der Schnecke und dem Antriebsmotor vorbeigeführten Abstandshaltern miteinander verbunden sind. Die Frontplatte bildet evtl. zusammen mit der Führung einen Auslass für den Betätigungsteil der rückensteifen Kette, während alle anderen Komponenten des Aktuators innerhalb der Tragkonstruktion und von dieser geschützt angeordnet sind. Dies eröffnet die Möglichkeit Kräfte, die durch die Anbringungssituation des Aktuators auftreten können, an dem Antriebsmotor und der Schnecke vorbeizuleiten. Die Frontplatte kann in diesem Zusammenhang auch als zweite Lagerplatte für die Schnecke verwendet werden.

In diesem Zusammenhang ist es gemäß einer Variante von besonderem Vorteil, wenn der Antriebsmotor einseitig an der Lagerplatte angeflanscht ist. Hierdurch ist sichergestellt, dass Kräfte, die aus der Anbringung des Aktuators resultieren nur in der Lagerplatte auftreten und ansonsten vom Antriebsmotor ferngehalten werden. Darüberhinaus bietet diese Ausgestaltung auch die Möglichkeit entsprechende Kühleinrichtungen im Abstand zur Tragkonstruktion vorzusehen.

Eine kompakte Ausgestaltung des Aktuators ist insbesondere gemäß einer Ausführungsform dann gegeben, wenn eine Haube vorgesehen ist, die die offenen Längsseiten der Tragkonstruktion abdeckt, wobei die Schnecke und der Antriebsmotor und gegebenenfalls das Kettendepot bzw. der seitlich an der Schnecke und dem Antriebsmotor entlanggeführte Abschnitt der rückensteifen Kette zwischen Grundplatte und Haube angeordnet sind. Bei einer Variante, bei der die Schubkraftbetätigung vom Antriebsmotor weg erfolgt, lässt sich so ein kompakter geschlossener Aktuator erzielen, aus dessen Gehäuse lediglich der Betätigungsbereich der rückensteifen Kette aus- und einfährt. An einem solchem Gehäuse sind dann selbstverständlich noch elektrische Anschlüsse und evtl. Befestigungsmöglichkeiten vorgesehen. Ein solches Modul stellt eine elektrische Alternative für Hydraulik- und Pneumatikzylinder dar. Um das Eintragen von Schmutz zu verhindern, kann die Durchführung der Kette aus dem Gehäuse mit einer speziell geformten Bürste versehen werden. Diese Bürste könnte auch die Kette einschließlich der Elemente zur Reibungsminderung, insbesondere die Gleitschuhe, nachschmieren.

Des Weiteren können Positionselemente an der rückensteifen Kette angebracht sein, die mittels eines oder mehrerer Sensoren detektierbar sind. Bevorzugt sind die Positionselemente auf einfache Weise montier- und demontierbar, z.B. einclipsbar in die rückensteife Kette. Aufgrund der Tatsache, dass die rückensteife Kette kein Kettenrad zum Antrieb benötigt, kann das Positionierelement in einem Zwischenraum der Kette (z.B. zwischen zwei Hülsen oder Rollen) eingefügt werden. Günstigerweise kann es sich bei dem Positionierelement um einen Permanentmagenten mit Halterung handeln und bei dem Sensor um einen Magnetsensor, insbesondere um einen Hall-Sensor. Durch die leichte Versetzbarkeit des Positionierelements lässt sich der Hubweg oder die Hubbegrenzung sehr leicht anpassen bzw. festlegen. Der Sensor sorgt dann für eine entsprechende Ansteuerung des Antriebsmotors. Dieser wird z.B. abgeschaltet. Auch ein elektronisches Steuergerät kann im Gehäuse eingebaut werden, so dass der Aktuator komplett funktionsfähig ist, lediglich mit Energie versorgt werden muss und durch Steuerbefehle aktiviert wird. Die Grundplatte kann dabei auch zur Ableitung der Verlustwärme z.B. aus den Leistungshalbleitern dienen.

Einklickbare magnetische Markierungen (Positionierlemente) können als Referenzpunkte benutzt werden, mit deren Hilfe die elektronische Steuerung den gesamten Fahrweg in beliebige Teilstrecken unterteilen kann.

Bei einer weiteren Ausgestaltung sind zwei parallele Schnecken vorgesehen, wobei die Kette zwischen den beiden Schnecken verläuft und Eingriffsmittel zum Eingreifen in beide Schnecken aufweist. Hierdurch ist eine symmetrische Krafteinbringung in die rückensteife Kette möglich. Bevorzugt werden überstehende Bolzen auf beiden Seiten der rückensteifen Kette verwendet, die jeweils in die zugehörige Schnecke eingreifen. Die Schnecken können jeweils über einen eigenen Antriebsmotor verfügen, wobei zwischen den Antriebsmotoren die rückensteife Kette angeordnet ist, oder es kann ein Getriebe verwendet werden, das die zweite Schnecke mit antreibt. Die beiden Schnecken sollten sich gegenläufig drehen, weshalb das Getriebe entsprechend ausgestaltet sein muss.

Prinzipiell eignet sich die Verwendung von zwei Schnecken auch zu einer gänzlich anderen Anordnung des Antriebsmotors, insbesondere wenn dieser mittig zwischen den beiden Schnecken positioniert ist. Bei einer solchen nicht erfindungsgemäßen Variante muss die Kette jedoch umgelenkt werden, um am Motor vorbeigeführt zu werden. Auf die Verwendung von zwei Schnecken, die gegenüberliegend mit der rückensteifen Kette im Eingriff stehen, kann jedoch ganz allgemein gesondert Schutz begehrt werden, auch unabhängig von der in Anspruch 1 definierten Erfindung.

Im folgendem wird eine Ausführungsform der vorliegenden Erfindung anhand von Zeichnungen näher erläutert. Es zeigen:
- Figur 1:: eine Seitenansicht eines erfindungsgemäßen Aktuators,
- Figur 2:: eine perspektivische Seitenansicht des Aktuators aus Figur 1, wobei eine Haube weggelassen worden ist,

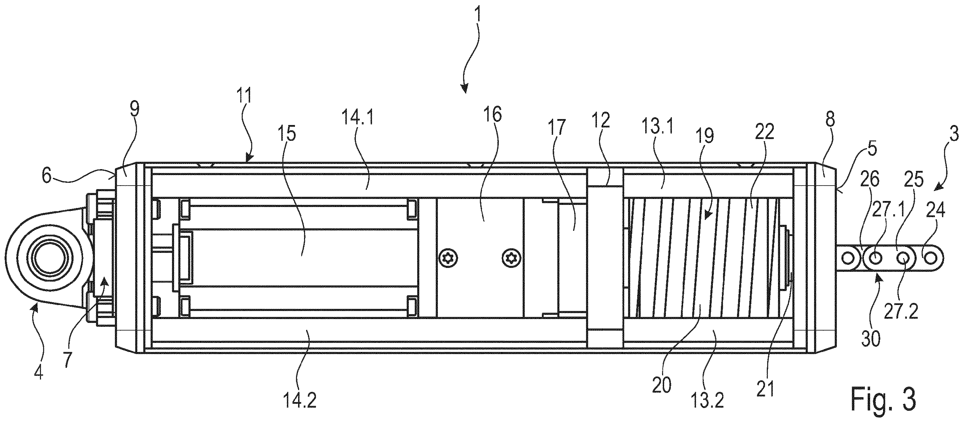

- Figur 3:: eine Draufsicht des Aktuators ohne Haube,
- Figur 4:: eine geschnittene Unteransicht des Aktuators, wobei eine Grundplatte und Führungsschienen weggelassen wurden,
- Figur 5:: eine Seitenansicht von wesentlichen Funktionsbestandteilen des Aktuators,

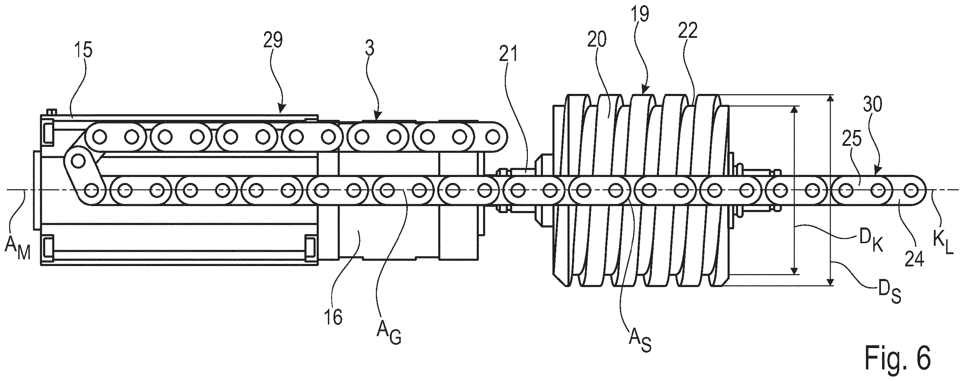

- Figur 6:: eine Unteransicht der Funktionsbestandteile aus Figur 5,
- Fig. 7:: eine geschnittene Seitenansicht einer ersten Variante der Schnecke und der rückensteifen Kette,
- Fig. 8: eine vergrößerte Detailansicht des Ausschnitts VII aus Fig. 7,
- Fig. 9: eine geschnittene Seitenansicht einer weiteren Variante der Schnecke und eines Eingriffsmittels der rückensteifen Kette,
- Fig. 10: eine Draufsicht einer Variante mit zwei Schnecken und beidseitig eingreifender rückensteifer Kette, und
- Fig. 11: die vergrößerte perspektivische Darstellung eines Innenkettenglieds mit einem eingesetzten Positionierelement, wobei die vordere Innenlasche als durchsichtiges Element dargestellt ist.

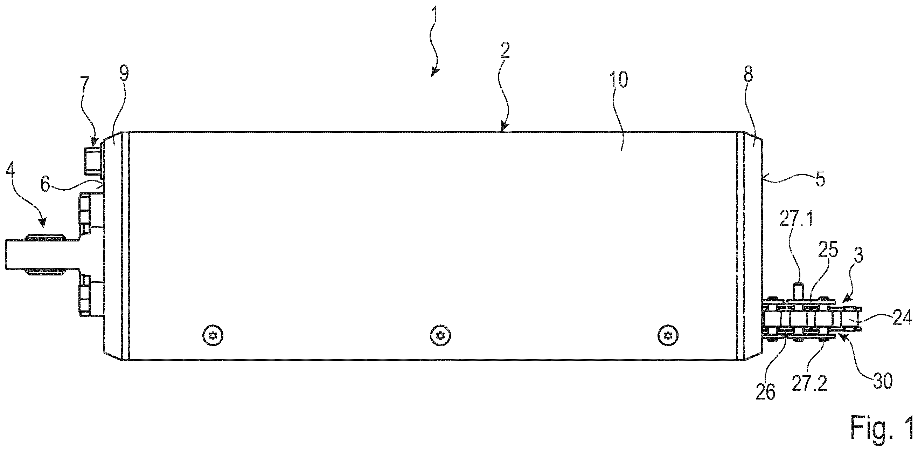

Der in Figur 1 dargestellte Aktuator 1 umfasst ein kastenförmiges Gehäuse 2, eine schubfähige rückensteife Kette 3 und einem Gelenkkopf 4 mit Kugelgelenk zur schwenkbaren Anbringung. Anstelle des Gelenkkopfs 4 mit Kugelgelenk können zahlreiche andere Befestigungsmöglichkeiten für den Aktuator 1 vorgesehen werden. Eine unmittelbare Anbringung am Gehäuse 2 ist ebenfalls denkbar. Die rückensteife Kette 3 fährt aus dem vorderen Ende bzw. der Vorderseite 5 des Gehäuses 2 ein und aus. Der Gelenkkopf 4 mit Kugelgelenk ist an dem hinteren Ende bzw. der Rückseite 6 des Gehäuses 2 angeschraubt. An der Rückseite 6 befindet sich auch eine elektrische Anschlussbuchse 7 zur Stromversorgung. Das Gehäuse 2 umfasst unter anderem eine Frontplatte 8, eine Endplatte 9 und eine im Querschnitt U-förmige Haube 10, die an eine Grundplatte 11 angeschraubt ist.

Das Gehäuse 2 umfasst eine Tragstruktur, zu der neben der Frontplatte 8 und der parallel dazu angeordneten Endplatte 9 auch die Grundplatte 11 gehört. Desweiteren zählen zur Tragstruktur auch eine auf der Grundplatte 11 angeordnete und sich parallel zur Frontplatte 8 und Endplatte 9 erstreckende Lagerplatte 12 sowie zylindrische Abstandshalter 13.1 und 13.2 zwischen der Frontplatte 8 und der Lagerplatte 12 und zylindrische Abstandshalter 14.1 und 14.2 zwischen der Lagerplatte 12 und der Endplatte 9. Die Abstandshalter 13.1 und 13.2 bzw. 14.1. und 14.2 sind mit den entsprechenden Platten 8, 9 und 12 stirnseitig verschraubt. Die Grundplatte 11 erstreckt sich über die gesamte Länge zwischen der Frontplatte 8 und der Endplatte 9. Die Haube 10 dient demnach lediglich der Abdeckung der innerhalb der Tragstruktur angeordnet und im Folgenden weiter beschriebenen Bauelemente.

Im Gehäuse 2 sind ein elektrischer Antriebsmotor 15 und ein dem Antriebsmotor 15 zugeordnetes Getriebe 16 zwischen der Lagerplatte 12 und der Endplatte 9 angeordnet. Der Antriebsmotor 15 zusammen mit dem Getriebe 16 sind mittels eines Flansches 17 an der Lagerplatte 12 befestigt, d. h. angeschraubt. Die Befestigung des Antriebsmotors 15 zusammen mit dem Getriebe 16 erfolgt demnach nur einseitig an der Lagerplatte 12. Der Antriebsmotor 15 verfügt über elektrische Anschlüsse 18. Aus Vereinfachungsgründen sind die elektrischen Leitungen zur Anschlussbuchse 7 nicht dargestellt. Das Getriebe 16 weist im vorliegenden Fall eine Untersetzung von 4:1 auf. Andere Untersetzungen sind möglich, z. B. 6:1.

Zwischen der Frontplatte 8 und der Lagerplatte 12 ist eine Schnecke 19 drehbar gelagert. Das bedeutet, dass sowohl in der Lagerplatte 12 als auch in der Frontplatte 8 ein Kugellager zur Lagerung der Schnecke 19 angeordnet sind.

Die Schnecke 19 ist zweiteilig aufgebaut und umfasst einen Schneckenkörper 20 und eine Antriebswelle 21, die sich durch den hülsenförmigen Schneckenkörper 20 erstreckt und mit diesem drehfest verbunden ist. Der Schneckenkörper 20 ist aus einem weicheren Material hergestellt als die Antriebswelle 21 und zum Einsatz kommen können Kunststoffe oder weichere Metalle wie Messing etc. Die Schnecke 19 weist an ihrer Mantelfläche bzw. ihrem Außenumfang eine umlaufende Wendelnut 22 mit einer vorbestimmten Steigung auf. Die Wendelnut 22 weist einen im Wesentlichen rechteckigen Querschnitt auf. Die Antriebswelle 21 ist drehfest mit einer Getriebewelle 23 verbunden.

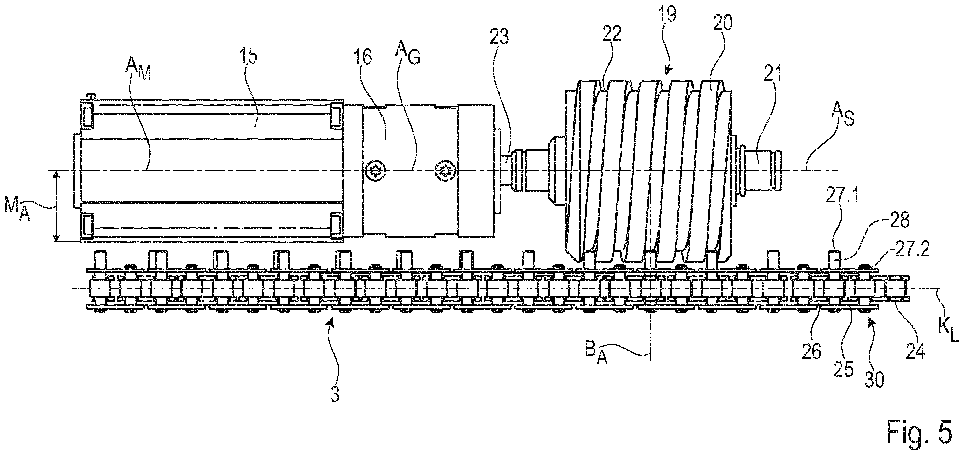

Im vorliegenden Ausführungsbeispiel sind die Motorachse A_{M} einschließlich der Getriebeachse A_{G} koaxial zur Schneckenachse A_{S} angeordnet (siehe Figur 5). Eine versetzte Anordnung ist möglich, muss aber den Bauraumanforderungen genügen. Der Durchmesser D_{S} der Schnecke 19 ist relativ groß, sodass der Außenumfang der Schnecke 19 den Außenumfang des Antriebsmotors 15 überragt. Dies muss zumindest auf der der Kette 3 zugewandten Seite der Fall sein. Die Schnecke 19, d. h. der Schneckenkörper 20 weist einen Kerndurchmesser D_{K} auf, der ebenfalls größer ist als die zugehörige Abmessung des Antriebsmotors 15 mit Getriebe 16.

Bei der rückensteifen Kette 3 handelt es sich um eine aus Innenkettengliedern 24 und Außenkettengliedern 25 bestehende Rollenkette. Zusätzlich sind zwischen den Innenkettengliedern 24 und den Außenkettengliedern 25 Versteifungslaschen 26 angeordnet, die dafür sorgen, dass in der im Wesentlichen geraden Ausrichtung der rückensteifen Kette 3 eine Schubkraft übertragbar ist. In einer Richtung sind die Kettenglieder 24, 25 jedoch gegeneinander verschwenkbar. Zu den Außenkettengliedern 25 gehören die Kettenbolzen 27.1 und 27.2. Sämtliche Enden der Kettenbolzen 27.1 und 27.2 stehen seitlich zumindest etwas über; jedoch sind die Kettenbolzen 27.1 wesentlich Länger als die Kettebolzen 27.2 ausgeführt, sodass sie an einer Seite zur Ausbildung eines Eingriffsbereichs 28 soweit vorstehen, dass die Eingriffsbereiche 28 in die Wendelnut 22 der Schnecke 19 eingreifen können, während die kürzeren Kettenbolzen 27.2 einen solchen Eingriff nicht aufweisen. Bei der vorliegenden Ausführungsform ist jeder zweite Kettenbolzen derart verlängert ausgeführt. Die Steigung der Wendelnut 22 entspricht der Teilung der rückensteifen Kette 3. Für einen guten Eingriff zwischen Schnecke 19 und rückensteifer Kette 3 reicht es aus, nur jeden zweiten Kettenbolzen zu verlängern. Die rückensteife Kette 3 ist so ausgerichtet, dass sie hochkant an der Grundplatte 11 entlanggeführt ist. Im vorliegenden Fall ist deshalb die Kettenlängsachse K_{L} parallel zur Motorachse A_{M}, Getriebeachse A_{G} und Schneckenachse A_{S} ausgerichtet. Im Eingriffsbereich 28 von rückensteifer Kette 3 und Schnecke 19 stehen die Bolzenachsen B_{A} der Kettenbolzen 27.1 im Wesentlichen genau senkrecht auf der Schneckenachse A_{S}. Die rückensteife Kette 3 ist innerhalb des Gehäuses 2 einmal umgelenkt, sodass sich unterhalb des Antriebsmotors 15 und des Getriebes 16 zwischen der Endplatte 9 und der Lagerplatte 12 ein Kettendepot 29 befindet. Im vorliegenden Ausführungsbeispiel besteht das Kettendepot 29 aus zwei parallelen zueinander verlaufenden Kettensträngen und des Umlenkbereichs. Im Kettendepot 29 befindet sich daher eine Kettenlänge, die größer ist als das 1,5-fache der Gesamtlänge von dem Antriebsmotor 15 einschließlich des Getriebes 16. Die Umlenkung der rückensteifen Kette 3 erfolgt naturgemäß um die Achsen der Kettenbolzen, sodass die gesamte rückensteife Kette 3 im Wesentlichen in einer Ebene verläuft (einer Ebene die senkrecht zur Zeichnungsebene der Figur 5 auf der Kettenlängsachse K_{L} verläuft, die parallel zur Motorachse A_{M}, der Getriebeachse A_{G} und der Schneckenachse A_{S} ausgerichtet ist). Selbstverständlich kann eine rückensteife Kette 3 in ihren Gelenken Spiel aufweisen, sodass dies eine idealisierte Betrachtungsweise ist. Im Ergebnis führt diese Anordnung der rückensteifen Kette 3 dazu, dass der vordere Bereich, d. h. der eigentliche Betätigungsbereich der rückensteifen Kette 3 zentral und am unteren Ende des Gehäuses 2 nach außen heraus geführt wird.

Hierzu weist die Frontplatte 8 einen Fensterdurchbruch 31 auf, durch den die rückensteife Kette 3 ein- und ausfahren kann.

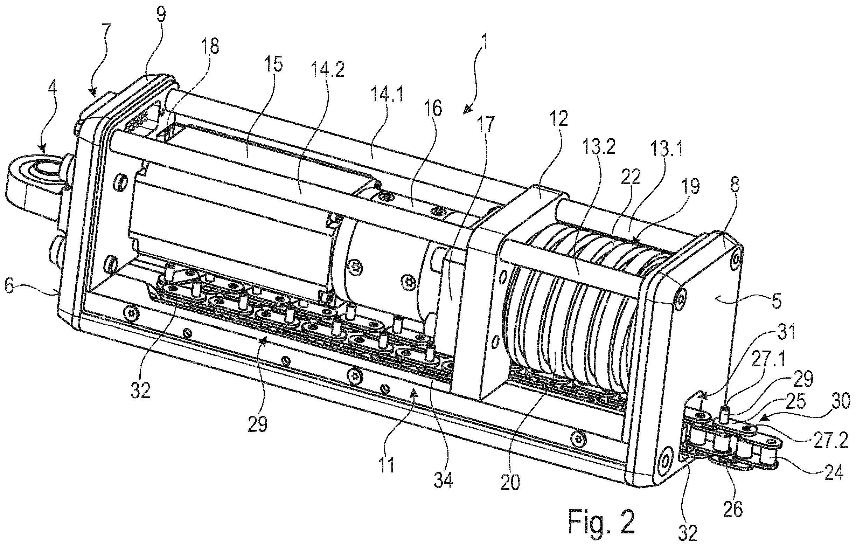

Wie insbesondere anhand der Figur 2 zu erkennen ist, ist in der Grundplatte 11 eine Nutstruktur eingebracht, sodass sich in dieser die rückensteife Kette 3 bewegen kann. Darüber hinaus ist die Nutstruktur so ausgestaltet, dass in dieser auch das Kettendepot 29 ausgebildet ist. Innerhalb der Nutstruktur sind sowohl an deren Boden als auch an den Seitenwänden Führungsschienen 32 aus einem Material mit geringem Reibwert eingebracht, die mit der Unterseite und der Vorder- und Rückseite der rückensteifen Kette 3 zur Anlage kommen. Diese Führungsschienen 32 können auswechselbar ausgestaltet sein.

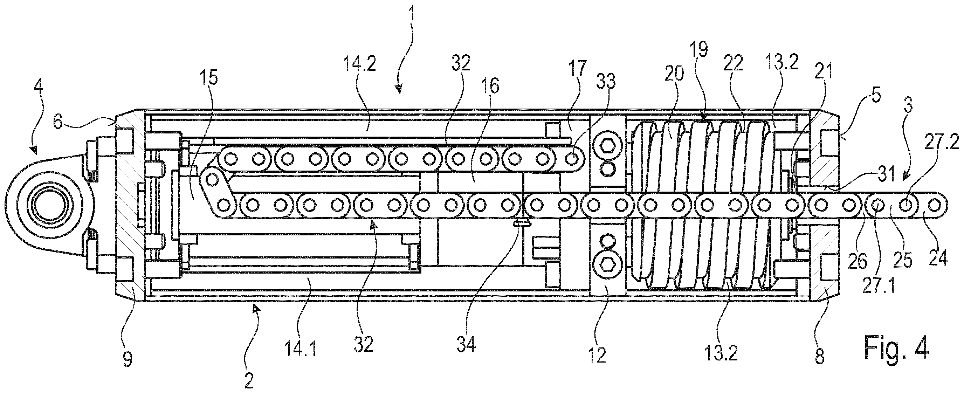

Anhand der Figur 4 ist zu erkennen, dass das letzte Glied der rückensteifen Kette 3, dass innerhalb des Kettendepots 29 angeordnet ist, mit einem Schraubbolzen 33 an der Grundplatte 11 befestigt wird.

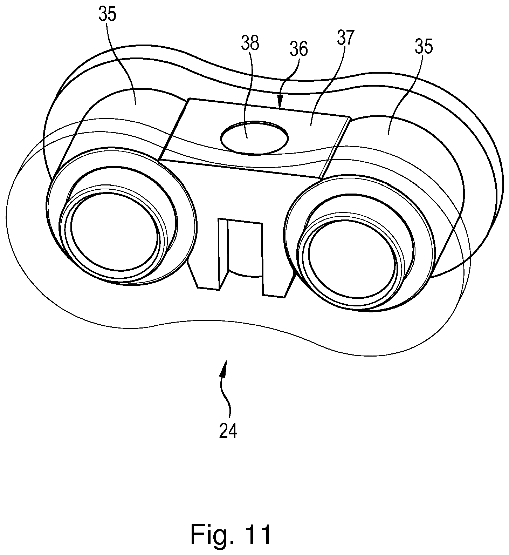

Desweiteren ist ein Kettensensor 34 vorgesehen, der Aufschluss über die Position der rückensteifen Kette 3 gibt und auch den Antriebsmotor 15 bei Erreichen der Endstellung abschaltet. Der Kettensensor 34 kann ebenfalls mit der Buchse 7 verdrahtet sein, um entsprechende Signale zu übermitteln. In der Fig. 11 ist ein Innenkettenglied 24 dargestellt. Zwischen die Rollen 35 des Innenkettengliedes ist ein Positionierelement 36 eingesteckt. Das Positionierelement 36 weist eine Kunststoffhalterung 37 und einen zylinderförmigen Permanentmagneten 38 auf. Die Kunststoffhalterung 37 ist an den Zwischenraum zwischen den Rollen 35 angepasst und an dieser Stelle federnd eingeclipst. Das Positionierelement 36 befindet sich an einem Innenkettenglied 24, das eine Endlage oder eine Zwischenposition des Aktuators 1 vorgibt. Der Kettensensor 34 detektiert den Permanentmagneten 38 und schaltet den Antriebsmotor 15 ab.Im Folgenden wird die Wirkungs- und Funktionsweise des oben beschriebenen erfindungsgemäßen Aktuators 1 näher erläutert.

Der Aktuator 1 weist eine Gestaltung und Leistung auf, wodurch er in der Lage ist, für bestimmte Anwendungssituationen alternativ zur Hydraulik- und insbesondere Pneumatikzylindern eingesetzt zu werden. Die rückensteife Kette 3 bietet die Möglichkeit, eine Schubkraft aufzubringen. Hierzu wird das vorderste Glied des Betätigungsbereichs 30 mit dem entsprechend zu betätigenden Element verbunden z.B. ein Fenster oder eine Tür etc. Die Figuren zeigen eine im Wesentlichen eingefahrene Stellung des Aktuators 1. Das hintere Ende des Aktuators 1 wird mithilfe des Gelenkkopfes 4 mit Kugelgelenk an einer dafür vorgesehenen Achse befestigt. Der Gelenkkopf 4 mit Kugelgelenk ermöglicht eine Verschwenkung in zwei Achsen, ähnlich wie es auch bei der Anordnung von Hydraulik- und Pneumatikzylindern bekannt ist. Anstelle aufwendiger Hydraulik- oder Pneumatikschaltungen braucht dieser elektrisch betriebene Aktuator 1 lediglich an die Stromversorgung und ggf. Steuerelektronik angeschlossen zu werden. Hierzu dient die Anschlussbuchse 7. Im Einsatz treibt der Antriebsmotor 15 mit seiner Motorwelle über die Untersetzung des Getriebes 16 die Schnecke 19 an. Durch die Drehung der Schnecke 19 bewegt sich die rückensteife Kette 3. Dreht sich die Schnecke im Uhrzeigersinn wird die rückensteife Kette 3 durch den Eingriff der Kettenbolzen 27.1 in die Wendelnut 22 aus dem Gehäuse 2 herausbewegt. Das entsprechend mit dem Betätigungsbereich 30 verbundene Element wird betätigt. Die Betätigung des Antriebsmotors 15 erfolgt solange, bis die entsprechend gewünschte Kettenlänge ausgefahren ist, maximal aber, bis die rückensteife Kette 3 maximal aus dem Kettendepot 29 herausgefahren ist. Durch die Selbsthemmung ist auch ein Bremsmechanismus nicht zwingend erforderlich. Wird der Antriebsmotor 15 andersherum angertrieben, d. h. die Schnecke 19 dreht entgegen des Uhrzeigersinns, wird die rückensteife Kette wieder eingefahren. Die entsprechende Anordnung im Kettendepot 29 erfolgt ganz automatisch, weil die Kettengelenke nur ein Schwenken in eine bestimmte Richtung zulassen.

Dadurch, dass insbesondere der unbelastete Teil der rückensteifen Kette 3 seitlich am Antriebsmotor 15 einschließlich des Getriebes 16 vorbeigeführt wird (d.h. im Bereich zwischen Lagerplatte 12 und Endplatte 9) lässt sich ein beträchtlicher Hubweg realisieren, ohne dass der Aktuator 1 eine allzu große Länge aufweisen muss. Lediglich zur Speicherung und Vorbeiführung der Kette 3 muss er eine gewisse Breite bzw. Höhe haben. Hierdurch eröffnen sich ganz neue und vielfältige Anwendungsmöglichkeiten für elektrisch betriebene Aktuatoren mit rückensteifen Ketten 3. Die modulare Bauweise bietet sich für die unterschiedlichsten Anwendungszwecke an, ohne dass jeweils Sonderlösungen konstruiert werden müssen. Das Zusammenspiel aus dem Durchmesser D_{S} der Schnecke 19, den Eingriffsbereichen 28 (d.h. der Höhe bzw. Breite der rückensteifen Kette 3) sowie der Außenabmessung des Antriebsmotors 15 einschließlich des Getriebes 16 führen zu diesen Vorteilen. Im konkreten Ausführungsbeispiel führt dies dazu, dass die rückensteife Kette 3 insgesamt in einer einzigen Ebene verlaufen kann. Insbesondere muss die rückensteife Kette 3 nicht im belasteten Betätigungsbereich 30 umgelenkt werden. Eine Umlenkung erfolgt vielmehr im unbelasteten Abschnitt im Bereich des Kettendepots 29, d.h. seitlich entlang des Antriebsmotors 15 einschließlich des Getriebes 16.

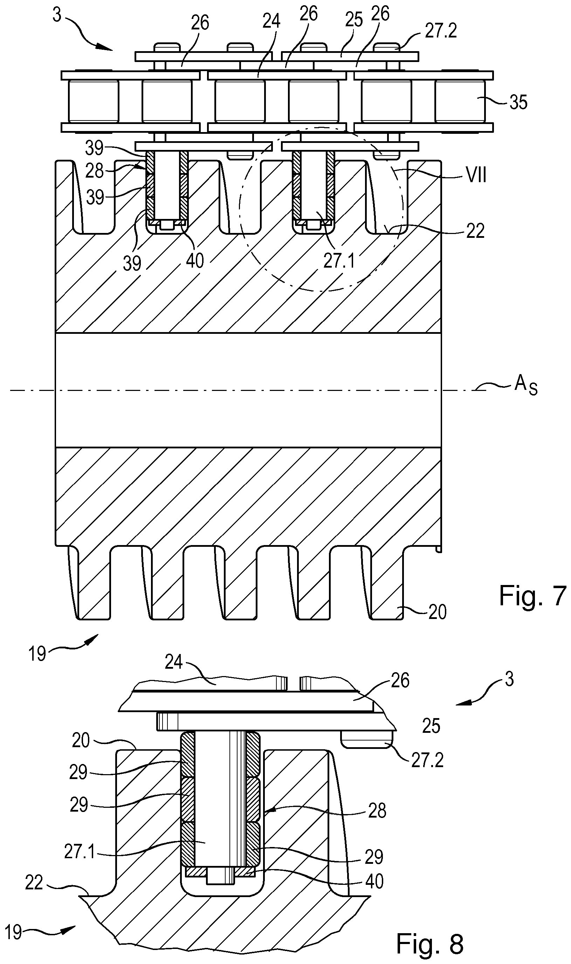

Die in Fig. 7 dargestellte Schnecke 19 weist im Vergleich zum vorangegangenen Ausführungsbeispiel eine etwas tiefere Wendelnut 22 auf. Die mit dieser in Eingriff stehenden Kettenbolzen 27.1 sind entsprechend länger ausgestaltet. Auf dem überstehenden Bereich der Kettenbolzen 27.1 sind jeweils drei drehbar angeordnete Rollen 39 angebracht und mittels einer Sicherungsscheibe 40 gesichert. Die Rollen 39 stehen mit der antreibenden Flanke der Wendelnut 22 in Berührung und wirken als Elemente zur Reibungsminderung. Zum Einsatz kommen können entsprechend reibungsarme Materialien, z.B. Kunststoff oder auch schmierstoffgetränkte poröse Materialien (z.B. Sinterrollen). Bevorzugt erfolgt, wie im vorliegenden Fall, eine Unterteilung in mehrere Rollen 39, so dass diese auch als Elemente zum Schlupfausgleich dienen, weil innerhalb der Wendelnut 22 in Abhängigkeit vom Durchmesser unterschiedlich Geschwindigkeiten vorliegen. Der Verschleiß wird hierdurch entsprechend reduziert. Die in Fig. 7 dargestellte Variante kann alternativ zu der rückensteifen Kette 3 und der Schnecke 19 aus dem vorangegangen Ausführungsbeispiel eingesetzt werden.

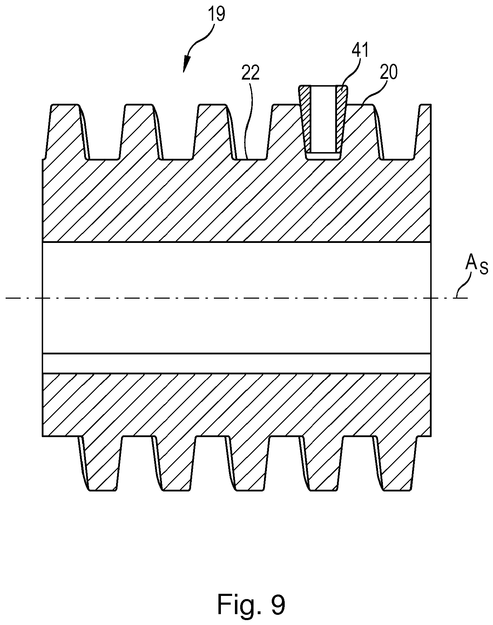

Anhand der Fig. 9 ist nunmehr eine Alternative zum vorangegangen Ausführungsbeispiel dargestellt. Anstelle von drei nebeneinander angeordneten Rollen 39 wird bei diesem Ausführungsbeispiel eine einzige Rolle 41 verwendet, die drehbar auf dem überstehenden Kettenbolzen 27.1 angeordnet ist. Die Rolle 41 ist konisch ausgestaltet und greift in eine entsprechende trapezförmige Wendelnut 22 ein. Die konische Rolle 41 dient wiederum als Element zur Reibungsminderung und aufgrund ihrer konischen Form und der daran angepassten Form der Wendelnut 22 dient sie auch als Element zum Schlupfausgleich. Mit dieser konischen Rolle 41 lassen sich sehr gut die Geschwindigkeitsunterschiede über die Höhe der Wendelnut 22 kompensieren.

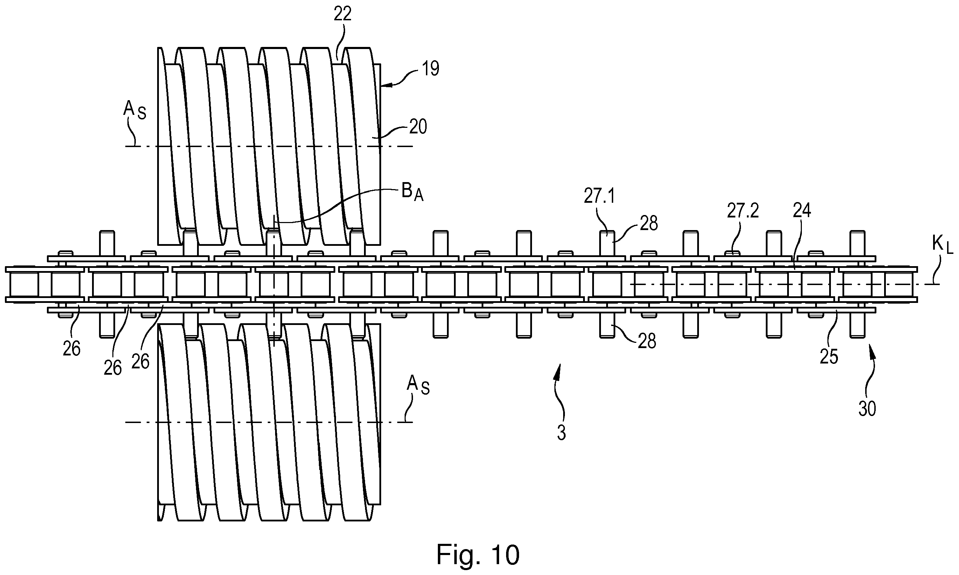

Anhand der Fig. 10 wird nunmehr eine gänzlich andere Ausführungsform dargestellt. Es werden zwei parallel nebeneinander drehbar angeordnete Schnecken 19 verwendet, zwischen denen die rückensteife Kette 3 durchgeführt ist. Die Kettenbolzen 27.1 sind beidseitig überstehend ausgestaltet und greifen gleichzeitig jeweils in die Wendelnuten 22 der beiden Schnecken 19 ein, die gemeinsam und symmetrisch die rückensteife Kette 3 antreiben. In einer bevorzugten Ausführungsform wird jede Schnecke 19 von einem eigenen Antriebsmotor angetrieben, so dass die rückensteife Kette 3 zwischen den beiden Antriebsmotoren hindurch geführt und ähnlich wie bei dem ersten Ausführungsbeispiel in einem Kettendepot zwischen den Antriebsmotoren untergebracht werden kann. Alternativ kann auch nur eine der beiden Schnecken 19 von einem zu dieser koaxial angeordneten Antriebsmotor angetrieben werden, während die andere Schnecke mittels eines Getriebes angetrieben wird. Die Verwendung von zwei Schnecken 22 lässt prinzipiell auch andere Anordnungsmöglichkeiten für einen oder mehrere Motoren zu, die auch unabhängig von der im Anspruch 1 definierten Anordnungsvariante sind, weshalb die gleichzeitige Verwendung von zwei Schnecken 19 zum Antrieben der rückensteifen Kette 3 auch hiervon unabhängig gesehen werden kann.

### Bezugszeichenliste

- 1: Aktuator
- 2: Gehäuse
- 3: rückensteife Kette
- 4: Gelenkkopf mit Kugelgelenk
- 5: Vorderseite
- 6: Rückseite
- 7: Anschlussbuchse
- 8: Frontplatte
- 9: Endplatte
- 10: Haube
- 11: Grundplatte
- 12: Lagerplatte
- 13.1 und 13.2: Abstandshalter
- 14.1 und 14.2: Abstandshalter
- 15: Antriebsmotor
- 16: Getriebe
- 17: Flansch
- 18: elektrische Anschlüsse
- 19: Schnecke
- 20: Schneckenkörper
- 21: Antriebswelle
- 22: Wendelnut
- 23: Getriebewelle
- 24: Innenkettenglied
- 25: Außenkettenglied
- 26: Versteifungslaschen
- 27.1 und 27.2: Kettenbolzen
- 28: Eingriffsbereich
- 29: Kettendepot
- 30: Betätigungsbereich
- 31: Fensterdurchbruch
- 32: Führungsschiene
- 33: Schraubbolzen
- 34: Kettensensor
- 35: Rolle
- 36: Positionierelement
- 37: Kunststoffhalterung
- 38: Permanentmagnet
- 39: Rolle
- 40: Sicherungsscheibe
- 41: konische Rolle
- M_{A}: Abstand zur Motoraußenseite
- K_{L}: Kettenlängsachse
- A_{M}: Motorachse
- A_{G}: Getriebeachse
- A_{S}: Schneckenachse
- D_{K}: Kerndurchmesser
- D_{S}: Schneckendurchmesser
- B_{A}: Bolzenachse

## Patentansprüche

1. Aktuator (1) mit einer rückensteifen Kette (3), einem Antriebsmotor (15), und einer vom Antriebsmotor (15) antreibbaren Schnecke (19) mit Wendelnut (22), wobei die rückensteife Kette (3) Eingriffsmittel aufweist und an der Schnecke (19) entlanggeführt ist und mit dieser zum Antreiben der rückensteifen Kette (3) mittels der Eingriffsmittel und der Wendelnut (22) im Eingriff steht, **dadurch gekennzeichnet, dass** der Kerndurchmesser (D_{K}) der Schnecke (19) größer ist als der doppelte Abstand der Motorachse (A_{M}) zur Motoraußenseite, an der die rückensteife Kette (3) entlanggeführt ist, und die rückensteife Kette (3) mit den Eingriffsmitteln zumindest teilweise am Antriebsmotor (15) entlanggeführt ist.

2. Aktuator (1) nach Anspruch 1, **dadurch gekennzeichnet, dass** die rückensteife Kette (3) in eine Ebene am Antriebsmotor (15) entlanggeführt ist, die parallel zur geometrischen Motorachse (A_{M}) angeordnet ist.

3. Aktuator (1) nach Anspruch 1 oder 2, **dadurch gekennzeichnet, dass** die rückensteife Kette (3) über eine Länge am Antriebsmotor (15) vorbeiführbar ist, die mindestens 50% der Länge, bevorzugt mindestens 80% der Länge, des Antriebsmotors (15) entspricht.

4. Aktuator (1) nach einem der vorhergehenden Ansprüche, **dadurch gekennzeichnet, dass** seitlich entlang des Antriebsmotors (15) ein Kettendepot (29) mit mindestens zwei nebeneinander liegenden, bevorzugt parallelen, Abschnitten der rückensteifen Kette (3) ausgebildet ist.

5. Aktuator (1) nach Anspruch 3, **dadurch gekennzeichnet, dass** in dem Kettendepot (29) ein Abschnitt der rückensteifen Kette (3) unterbringbar ist, dessen Länge mindestens der 1,5-fachen Länge des Antriebsmotors (15) entspricht.

6. Aktuator (1) nach einem der vorangegangenen Ansprüche, **dadurch gekennzeichnet, dass** der Antriebsmotor (15) ein Getriebe (16) aufweist, das mit der Schnecke (19) gekoppelt ist.

7. Aktuator (1) nach einem der vorangegangenen Ansprüche, **dadurch gekennzeichnet, dass** die Schnecke (19) einen hülsenförmigen Schneckenkörper (20) und eine drehfest mit diesem verbundene Antriebswelle (21) aufweist.

8. Aktuator (1) nach einem der vorangegangenen Ansprüche, **dadurch gekennzeichnet, dass** die rückensteife Kette (3) zumindest in vorbestimmten Abständen und zumindest einseitig seitlich überstehende Kettenbolzen (27.1) als Eingriffsmittel derart aufweist, dass ein überstehender Teil der Kettenbolzen (27.1) mit der Schnecke (19) in Eingriff steht bzw. bringbar ist.

9. Aktuator (1) nach einem der vorangegangenen Ansprüche, **dadurch gekennzeichnet, dass** die Eingriffsmittel Elemente zur Reibungsminderung in der Form von mindesten einer drehbaren Rolle (35,41) oder eines Gleitschuhs aufweisen, die in die Wendelnut (22) der Schnecke (19) eingreifen.

10. Aktuator nach Anspruch 9, **dadurch gekennzeichnet, dass** die Eingriffsmittel Elemente zum Schlupfausgleich in der Form von mehreren nebeneinander an einem überstehenden Kettenbolzen (27.1) angeordneter drehbarer Rollen (35) und/oder einer konisch ausgebildeten Rolle (41) und einer daran angepassten Wendelnut (22) aufweist.

11. Aktuator (1) nach einem der vorangegangenen Ansprüche, **dadurch gekennzeichnet, dass** die rückensteife Kette (3) im Bereich der Schnecke (19) und des Antriebsmotors (15) mittels einer Führungsschiene (32) geführt ist, die eine der Eingriffsseite abgewandte Seite und die jeweils nach außen weisenden Seiten der rückensteifen Kette (3) führt bzw. abstützt.

12. Aktuator (1) nach einem der vorangegangenen Ansprüche, **dadurch gekennzeichnet, dass** eine Tragkonstruktion mit einer Grundplatte (11) und einer die rückensteife Kette (3) überbrückenden, an der Grundplatte (11) angeordnete Lagerplatte (12) vorgesehen ist, wobei an der einen Seite der Lagerplatte (12) die Schnecke (19) gelagert ist.

13. Aktuator (1) nach Anspruch 12, **dadurch gekennzeichnet, dass** die Tragkonstruktion eine die rückensteife Kette (3) überbrückende Frontplatte (8) am vorderen Ende der Grundplatte (11) und eine Endplatte (9) am hinteren Ende der Grundplatte (11) im Wesentlichen parallel zur Lagerplatte (12) sowie Abstandshalter (13.1, 13.2; 14.1, 14.2) aufweist, wobei die Frontplatte (8), die Lagerplatte (12) und die Endplatte (9) zusätzlich zur Grundplatte (11) mittels der an der Schnecke (19) und dem Antriebsmotor (15) vorbeigeführten Abstandshalter (13.1, 13.2; 14.1, 14.2) miteinander verbunden sind.

14. Aktuator (1) nach Anspruch 12 oder 13, **dadurch gekennzeichnet, dass** eine Haube (10) vorgesehen ist, die die offenen Längsseiten der Tragkonstruktion abdeckt und dass die Schnecke (19) und der Antriebsmotor (15) und gegebenenfalls das Kettendepot (29) bzw. der seitlich an der Schnecke (19) und dem Antriebsmotor (15) entlanggeführte Abschnitt der rückensteifen Kette (3) zwischen der Grundplatte (11) und der Haube (10) angeordnet sind.

15. Aktuator nach einem der vorangegangenen Ansprüche, **dadurch gekennzeichnet, dass** zwei parallele Schnecken (19) vorgesehen sind und die rückensteife Kette (3) zwischen den beiden Schnecken (19) verläuft und Eingriffsmittel zum Eingreifen in beide Schnecken (19) aufweist.

## Claims

1. Actuator (1) having an anti-backbend chain (3), a drive motor (15), and a worm (19) with a helical groove (22) which can be driven by the drive motor (15), whereby the anti-backbend chain (3) has engagement means and is guided along the worm (19) and is in engagement with the latter for driving the anti-backbend chain (3) by means of the engagement means and the helical groove (22), **characterized in that** the core diameter (D_{K}) of the worm (19) is greater than twice the distance of the motor axis (A_{M}) from the motor outer side along which the anti-backbend chain (3) is guided, and wherein the anti-backbend chain (3) is guided with the engagement means at least partially along the drive motor (15) .

2. Actuator (1) according to claim 1, **characterized in that** the anti-backbend chain (3) is guided along the drive motor (15) in a parallel plane to the geometric motor axis (A_{M}).

3. Actuator (1) according to claim 1 or 2, **characterized in that** the anti-backbend chain (3) can be guided past the drive motor (15) over a length which corresponds to at least 50% of the length, preferably at least 80% of the length, of the drive motor (15).

4. Actuator (1) according to one of the preceding claims, **characterized in that** a chain depot (29) with at least two adjacent, preferably parallel, sections of the anti-backbend chain (3) is formed laterally along the drive motor (15).

5. Actuator (1) according to claim 3, **characterized in that** a section of the anti-backbend chain (3) can be accommodated in the chain depot (29), whereof the length corresponds to at least 1.5 times the length of the drive motor (15).

6. Actuator (1) according to one of the preceding claims, **characterized in that** the drive motor (15) has a gear (16) which is coupled to the worm (19).

7. Actuator (1) according to one of the preceding claims, **characterized in that** the worm (19) has a tubular worm body (20) and a drive shaft (21) connected thereto in a rotationally fixed manner.

8. Actuator (1) according to one of the preceding claims, **characterized in that** the anti-backbend chain (3) has at least at predetermined spacings and at least on one side laterally protruding chain pins (27.1) as engagement means in such a way that a protruding part of the chain pins (27.1) engages or can be brought into engagement with the worm (19) .

9. Actuator (1) according to one of the preceding claims, **characterized in that** the engagement means comprise elements for reducing friction in the form of at least one rotatable roll (35, 41) or a sliding block, which engage in the helical groove (22) of the worm (19).

10. Actuator according to claim 9, **characterized in that** the engagement means comprise elements for slip compensation in the form of several rotatable rolls (35) arranged side by side on a projecting chain pin (27.1) and/or a conically shaped roll (41) and a helical groove (22) adapted thereto.

11. Actuator (1) according to one of the preceding claims, **characterized in that** the anti-backbend chain (3) is guided in the area of the worm (19) and the drive motor (15) by means of a guide track (32), which guides or supports a side facing away from the engagement side and the respective outwardly facing sides of the anti-backbend chain (3).

12. Actuator (1) according to one of the preceding claims, **characterized in that** a supporting structure with a base plate (11) and a bearing plate (12) bridging the anti-backbend chain (3) and arranged on the base plate (11) is provided, whereby the worm (19) is mounted on one side of the bearing plate (12).

13. Actuator (1) according to claim 12, **characterized in that** the supporting structure comprises a front plate (8) bridging the anti-backbend chain (3) at the front end of the base plate (11) and an end plate (9) at the rear end of the base plate (11) substantially parallel to the bearing plate (12) as well as spacers (13. 1, 13.2; 14.1, 14.2), whereby the front plate (8), the bearing plate (12) and the end plate (9) are connected to one another in addition to the base plate (11) by means of the spacers (13.1, 13.2; 14.1, 14.2) guided past the worm (19) and the drive motor (15).

14. Actuator (1) according to claim 12 or 13, **characterized in that** a cover (10) is intended to cover the open longitudinal sides of the supporting structure and that the worm (19) and the drive motor (15) and, if necessary, the chain depot (29) or the section of the anti-backbend chain (3) guided laterally along the worm (19) and the drive motor (15) are arranged between the base plate (11) and the cover (10).

15. Actuator according to one of the preceding claims, **characterized in that** two parallel worms (19) are provided and the anti-backbend chain (3) runs between the two worms (19) and has engagement means for engaging both worms (19).

## Revendications

1. Actionneur (1) comportant une chaîne semi-rigide (3), un moteur d'entraînement (15) et une vis sans fin (19) pouvant être entraînée par le moteur d'entraînement (15) et dotée d'une rainure hélicoïdale (22), dans lequel la chaîne semi-rigide (3) comporte des moyens de mise en prise et est guidée le long de la vis sans fin (19) et est mise en prise avec elle pour entraîner la chaîne semi-rigide (3) à l'aide des moyens de mise en prise et de la rainure hélicoïdale (22), **caractérisé en ce que** le diamètre de noyau (Dₖ) de la vis sans fin (19) est supérieur à deux fois la distance entre l'axe de moteur (A_{M}) et le côté extérieur du moteur, le long duquel la chaîne semi-rigide (3) est guidée, et la chaîne semi-rigide (3) est au moins partiellement guidée à l'aide des moyens de mise en prise le long du moteur d'entraînement (15).

2. Actionneur (1) selon la revendication 1, **caractérisé en ce que** la chaîne semi-rigide (3) est guidée le long du moteur d'entraînement (15) dans un plan qui est disposé parallèlement à l'axe géométrique du moteur (A_{M}).

3. Actionneur (1) selon la revendication 1 ou 2, **caractérisé en ce que** la chaîne semi-rigide (3) peut être guidée devant le moteur d'entraînement (15) sur une longueur qui correspond à au moins 50 % de la longueur, de préférence à au moins 80 % de la longueur du moteur d'entraînement (15).

4. Actionneur (1) selon l'une des revendications précédentes, **caractérisé en ce qu'**un dépôt de chaîne (29) avec au moins deux sections adjacentes, de préférence parallèles, de la chaîne semi-rigide (3) est formé latéralement le long du moteur d'entraînement (15).

5. Actionneur (1) selon la revendication 3, **caractérisé en ce qu'**une section de chaîne semi-rigide (3) peut être logée dans le dépôt de chaîne (29), section dont la longueur correspond à au moins 1,5 fois la longueur du moteur d'entraînement (15).

6. Actionneur (1) selon l'une des revendications précédentes, **caractérisé en ce que** le moteur d'entraînement (15) comporte un engrenage (16) couplé à la vis sans fin (19).

7. Actionneur (1) selon l'une des revendications précédentes, **caractérisé en ce que** la vis sans fin (19) comporte un corps de vis sans fin en forme de manchon (20) et un arbre d'entraînement (21) solidaire en rotation avec ledit corps.

8. Actionneur (1) selon l'une des revendications précédentes, **caractérisé en ce que** la chaîne semi-rigide (3) comporte des axes de chaîne (27.1) qui font saillie latéralement au moins à des intervalles prédéterminés et au moins d'un côté en tant que moyens de mise en prise d'une manière telle qu'une partie en saillie des axes de chaîne (27.1) est ou peut être amenée en prise avec la vis sans fin (19).

9. Actionneur (1) selon l'une des revendications précédentes, **caractérisé en ce que** les moyens de mise en prise comportent des éléments de réduction du frottement sous la forme d'au moins un galet rotatif (35,41) ou d'un patin coulissant qui viennent en prise dans la rainure hélicoïdale (22) de la vis sans fin (19).

10. Actionneur selon la revendication 9, **caractérisé en ce que** les moyens de mise en prise comportent des éléments de compensation du glissement sous la forme d'une pluralité de galets rotatifs (35) disposés les uns à côté des autres sur un axe de chaîne en saillie (27.1) et/ou un rouleau conique (41) et une rainure hélicoïdale (22) adaptée à celui-ci.

11. Actionneur (1) selon l'une des revendications précédentes, **caractérisé en ce que** la chaîne semi-rigide (3) est guidée dans la zone de la vis sans fin (19) et du moteur d'entraînement (15) au moyen d'un rail de guidage (32), qui guide ou supporte un côté opposé au côté de mise prise et les côtés respectivement tournés vers l'extérieur de la chaîne semi-rigide (3).

12. Actionneur (1) selon l'une des revendications précédentes, **caractérisé en ce qu'**une structure porteuse dotée d'une plaque de base (11) et d'une plaque d'appui (12) enjambant la chaîne semi-rigide (3) et disposée sur la plaque de base (11) est prévue, dans lequel la vis sans fin (19) est montée sur un côté de la plaque d'appui (12).

13. Actionneur (1) selon la revendication 12, **caractérisé en ce que** la structure porteuse comporte une plaque avant (8) enjambant la chaîne semi-rigide (3) à l'extrémité avant de la plaque de base (11) et une plaque d'extrémité (9) à l'extrémité arrière de la plaque de base (11), sensiblement parallèlement à la plaque d'appui (12) et aux entretoises (13.1, 13.2 ; 14.1, 14.2), dans lequel la plaque avant (8), la plaque d'appui (12) et la plaque d'extrémité (9) sont reliées les unes aux autres en plus de la plaque de base (11) au moyen des entretoises (13.1, 13.2 ; 14.1, 14.2) guidées devant la vis sans fin (19) et le moteur d'entraînement (15).

14. Actionneur (1) selon la revendication 12 ou 13, **caractérisé en ce qu'**il est prévu un capot (10) qui recouvre les côtés longitudinaux ouverts de la structure porteuse et que la vis sans fin (19) et le moteur d'entraînement (15) et éventuellement le dépôt de chaîne (29) ou la section de la chaîne semi-rigide (3) guidée latéralement le long de la vis sans fin (19) et du moteur d'entraînement (15) sont disposés entre la plaque de base (11) et le capot (10).

15. Actionneur selon l'une des revendications précédentes, **caractérisé en ce que** deux vis sans fin parallèles (19) sont prévues et la chaîne semi-rigide (3) s'étend entre les deux vis sans fin (19) et comporte des moyens de mise en prise pour entrer en prise dans les deux vis sans fin (19).
